# EUROPEAN PATENT SPECIFICATION

(11) **EP 2 305 974 B1**
(45) Date of publication and mention of the grant of the patent: **15.05.2013**
(21) Application number: 10179538.3
(22) Date of filing: 24.09.2010
(51) Int. Cl.: F01M 5/00, F01M 1/12, F01P 11/08

(54) **Lubrication cooler system and method**
Schmiermittelkühlsystem und -verfahren
Système de refroidissement de lubrification et procédé

(30) Priority: 24.09.2009 EP 09460043
(43) Date of publication of application: 06.04.2011
(73) Proprietor: Eaton Truck Components Sp. z.o.o., 83-110 Tczew (PL)
(72) Inventor: Andrzejak, Grzegorz, 06400 Ciechanów (PL); Kogut, Jakub, 81166 Gdynia (PL); Kilshaw, Anthony, Wigan Lancashire WN4 8PT (GB)
(74) Representative: Tabeling, Marcella M.J.

(56) References cited:
- EP-A1- 0 185 894
- EP-A1- 0 501 018
- DE-A1- 2 523 436
- FR-A- 826 822
- FR-A1- 2 871 516
- US-A- 1 860 731
- US-A- 5 307 865
- US-A1- 2003 234 097

## Description

The present invention relates to a lubrication cooler system and particularly, but not exclusively, to an oil cooler system for automotive components such as a vehicle engine or transmission. The present invention also relates to methods of manufacture of a lubrication cooler system for, but not exclusively, an engine or transmission oil cooler system of an automotive vehicle engine.

A system such as an automotive engine or transmission system requires lubrication of the moving parts, to avoid or reduce friction therebetween and minimise wear of the components. The lubricant (e.g. oil) also acts to cool the components. The oil is provided in a circulating system, so that it can be reused. However, as the component parts operate, their temperature increases and heat is transferred to the circulating oil. This is compounded during times of arduous operation (e.g. high engine torque / low vehicle speed) and, for example, as a result of any friction occurring between component parts or between components and impurities in the oil. Overheating of the oil can have a detrimental effect on its quality, e.g. through oxidation, leading to inefficiencies in the lubrication system and potential damage to the component parts. An oil cooler may therefore be employed, to cool the oil, avoid degradation and prolong the life of the oil and the component parts.

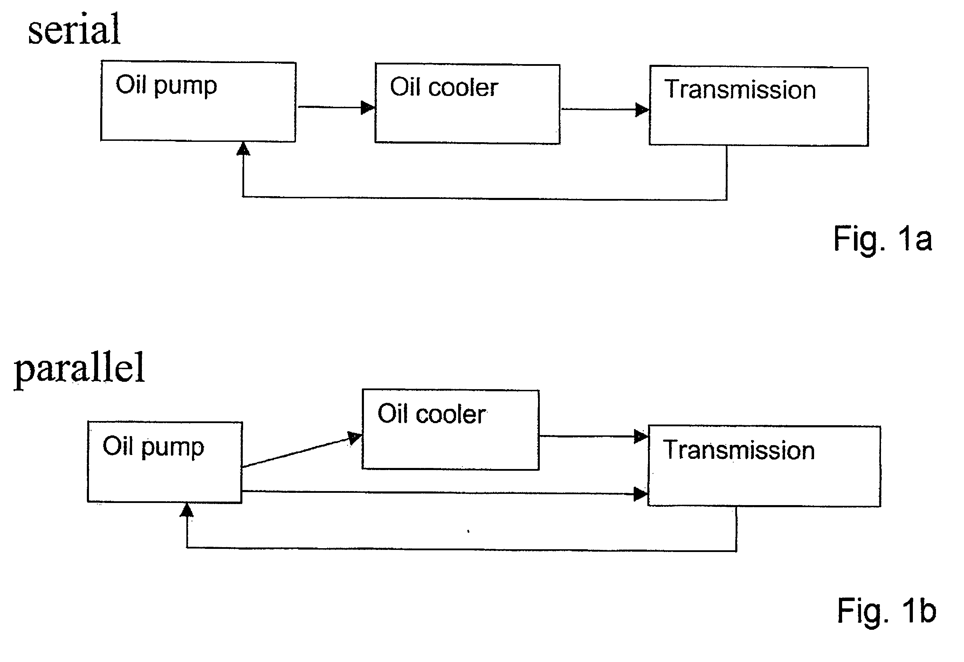

One use of such an oil cooler is in a vehicle transmission system. It is known to provide an oil cooler internally or externally to the transmission, between a transmission oil pump and a transmission oil lubricating system. Oil is provided from a sump in the transmission system to the oil pump, and is cooled by the cooler en route to the transmission oil lubricating system. The oil is then returned to the sump. This is a typical 'serial' oil lubrication cooling system (Figure 1a). However, it may not always be necessary to cool the oil, e.g. under normal operating conditions. Furthermore, doing so may have a detrimental effect because, as the oil is cooled, its viscosity increases.

This will slow the flow of oil and could reduce the effectiveness of the lubricating system and reduce the mechanical efficiency of the transmission due to oil drag losses.

It is also known to provide a 'parallel' oil lubrication cooling system (Figure 1b), wherein a bypass flow path is also provided directly between the oil pump and the transmission lubricating system (i.e. bypassing the oil cooler), with a combined oil feed path to the transmission lubricating system. In such 'parallel' oil lubrication cooling systems, active control valves, such as an oil temperature-sensitive control valve or oil pressure-sensitive control valve are provided for varying the amount of oil flowing through the oil cooler and thus through the 'main' flow path, when a particular temperature or pressure threshold is reached.

For example, US Patent Specification 3,353,590 describes a unitary oil filtering and cooling attachment for internal combustion engines that includes a temperature responsive valve carried within the engine housing for responding to the temperature of the oil for controlling the flow of oil to the cooling attachment when the oil is below a predetermined temperature.

The provision of active valve control adds complexity to the manufacture and maintenance of these prior art systems. This is particularly so during a manufacture of automotive vehicles having differing performance characteristics from one another wherein different applications (i.e. different automotive engines or transmissions), have inherently different lubrication and cooling requirements. There is therefore a difficulty during conventional manufacture in ensuring that the desired amount of lubrication and cooling is provided for the expected operating conditions for a given application or vehicle. There therefore exists the problem of providing a tailored system for each application or vehicle during manufacture without undue complexity and cost.

The invention relates to the provision of a lubrication cooler system that has a static or fixed balancing system such that the lubricant flowing through the flow path(s) is preset or predetermined according to the amount of lubricant (e.g. oil) that is to flow to satisfy the operating or running characteristics of the vehicle being manufactured when in use. It is an advantage that a simple adjusting means provides for this preset or static balancing between external lubricant cooling and internal lubrication requirements, and that the balance can be set during manufacture and installation of the system so that it is static or fixed before and after the system is taken into operation. A static or fixed balancing system is for example disclosed in FR 2871516.

The present invention has been conceived with the foregoing in mind.

In accordance with a first aspect of the present invention there is provided a lubrication cooler system as defined in claim 1. In accordance with a second aspect of the invention, there is provided an automotive vehicle engine or transmission system as defined in claim 4. In accordance with a third aspect of the present invention there is provided a method of manufacturing a lubrication cooler system as defined in claim 5.

The invention lies in providing a simple mechanical device, which may be a mechanical plug or threaded bolt that can be chosen depending on the application (e.g. vehicle) requirements after manufacture, avoiding the need to tailor or calibrate an actively controlled flow valve in accordance with prior art systems.

The blocking means is a plug or threaded bolt insertable into the first or second flow path. The plug may be sized to block the first or second flow path by a predetermined amount in order to block the flow path by a preset and fixed amount thereby to provide a static control of the amount of lubricant flowing within said first or second flow path during operation of the system. The plug may comprise a head and a body, wherein the body is insertable into the first or second flow path during manufacture of the system. The plug body can have a length chosen to block or obstruct the first or second flow path by the predetermined amount. The plug body may be threaded along all or a part of its length, and the plug body engageable in a correspondingly threaded aperture provided in the first flow path. The extent to which the plug body extends into the flow path, and so the presetting or preselection of the static balance between the amount of fluid or lubricant flowing in the first and second paths during operation, may be determined by the number of turns the threaded body is screwed into the aperture.

It is an advantage that the plug is a simple mechanical device, easily installed in the lubrication cooler system during manufacture. By simply selecting between plugs of different lengths, the lubricant flow within the flow path in which the plug is inserted can be preset or preselected depending on the type of vehicle or its destined mode of operation. In other words, respective ones of a plurality or range of bolts of different sizes may correspond to respective ones of a plurality or range of different engines or vehicle types. Alternatively or in addition, the presetting of the flow restriction can be achieved by inserting the plug into the flow path to a predetermined depth. This simplifies the manufacture of lubrication cooler systems and is particularly useful in an assembly line of different vehicle types that require different flow balancing.

In methods embodying the invention, the step of selectively blocking may comprise: selecting between a plurality of blocking means, each configured to block the first/and or second flow paths by a respectively different static and preset amount such as to define different respective applications for the engine or transmission system; and inserting the selected blocking means into said first or second flow path

In embodiments of the invention, the lubrication cooler system is preferably provided without active flow control in either of the flow paths, thereby to provide a truly preset or static balance between the amount of lubricant flowing in one path relative to the other. Alternatively or in addition, the restricted flow may be static and preset to be independent of any active control.

A lubrication pump may provide lubricant from a lubricant reservoir to the lubrication inlet along an inlet flow path. The pump may be driven by an engine or engine transmission. The pump assembly may comprise a port for connecting to an inlet of the cooler and a port for connecting to an outlet of the cooler.

Receiving means (e.g. an aperture) may be provided in the lubrication cooling system or the integrated pump assembly for receiving the blocking means in order to vary or adjust the lubricant flow.

The integrated pump assembly advantageously provides a convenient way of implementing the lubrication cooler system of the first and third aspects of the invention into an engine transmission system during manufacture. Advantageously, the pump assembly is a self-contained assembly comprising not only the lubrication pump and lubrication inlet and outlet, but also a simple device (the blocking means) for adjusting the amount of lubrication flowing therethrough.

A recirculating lubrication system may comprise the lubrication cooler system and/or the oil pump assembly and flow paths for transporting lubricant from a reservoir to the lubrication inlet and from the lubrication outlet (or from a component to which lubricant has been supplied from the lubrication outlet) back to the reservoir. The blocking means provided in the first/second flow path provides the recirculating lubrication system with adjustable cooling.

Embodiments of the present invention will now be described with reference to the following drawings in which:
Figure 2 illustrates a schematic view of the lubricant flow paths of a parallel lubrication / cooler system;
Figure 3 is a simplified representation of the lubricant flow paths of Figure 2;
Figures 4 and 5 show the parallel oil lubrication cooler system employed in a typical vehicle transmission system;
Figures 6a and 6b show an exemplary oil pump assembly that can be used in the system of Figure 2 and Figure 6c is a sectional view through the oil pump assembly of Figure 6a;
Figure 7 shows the oil pump assembly of Figures 6a-6c in situ in a vehicle transmission housing;
Figure 8 shows the oil pump assembly of Figures 6a-6c in situ in a vehicle transmission housing assembly, and showing one of the lubrication flow paths;
Figures 9 and 10 show composite views, from the side and top respectively, of a section through the oil pump assembly and a schematic of an oil pump;
Figures 11a and 11b show a lubricant plug in accordance with one embodiment of the invention;
Figures 12a and 12b show the lubricant plug in accordance with another embodiment of the invention
Figures 13a and 13b show two exemplary plugs for use in embodiments of the present invention.

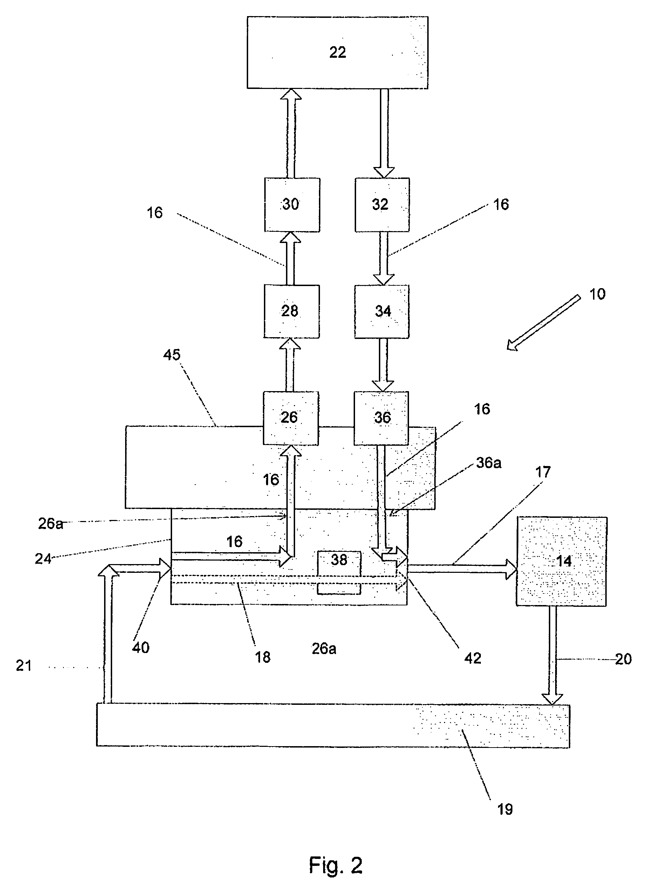

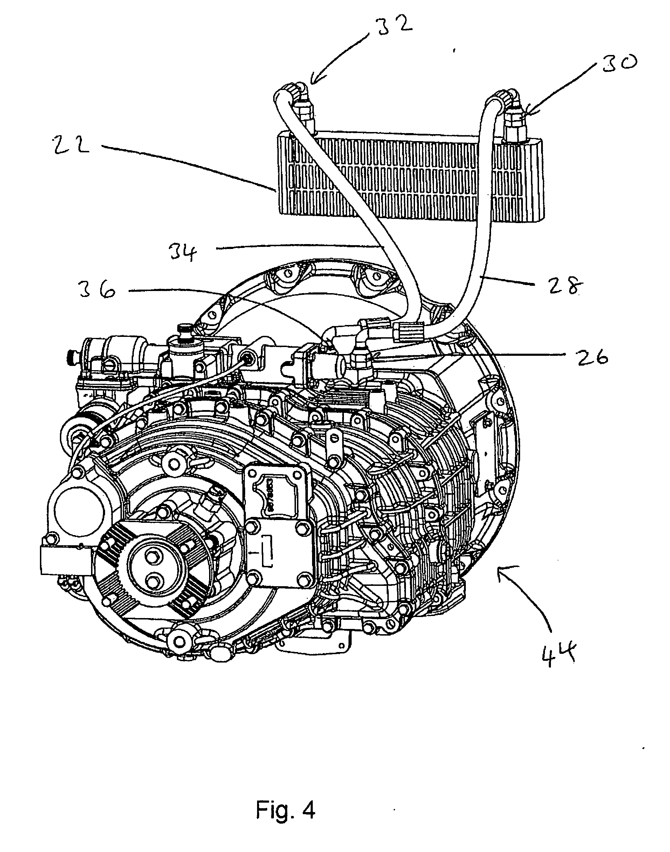

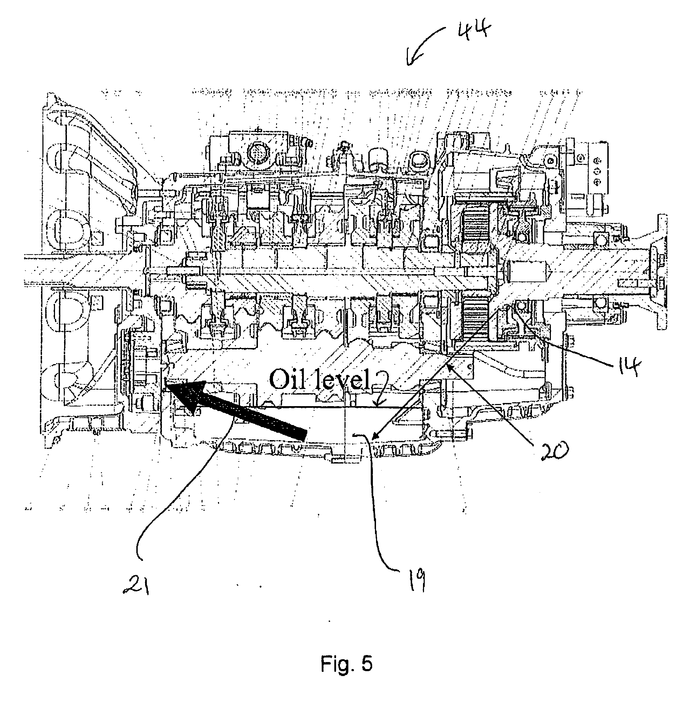

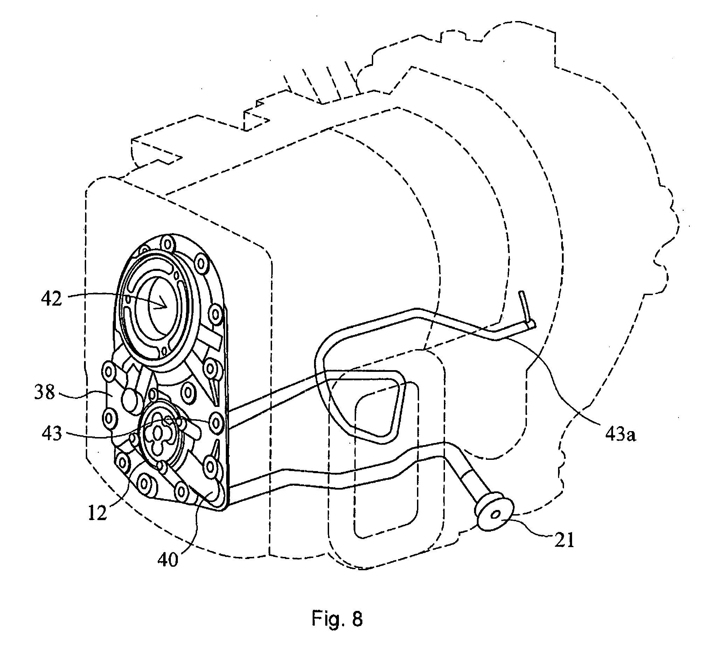

Referring to Figure 2, a schematic representation of a parallel lubrication cooler system 10 is shown. The system 10 will be described as used in a vehicle transmission system 44 (not shown in this Figure - see e.g. Figure 4), but it will be appreciated that many other uses are envisaged. Lubricant (e.g. oil) is provided from a transmission oil sump 19 to the inlet 40 of an oil pump assembly 24 by means of a suction pipe 21 (see also Figure 8), which has an inlet that is located in the transmission sump 19. The oil is pumped from the oil pump assembly 24 via an outlet 42 to a component 14 requiring lubrication (e.g. the range section of a vehicle transmission) along outlet flow path 17. Lubricant from the component 14 is returned to the transmission sump 19, along flow path 20, e.g. by falling under gravity (see also Figure 5). From the sump 19, the oil is recirculated back to the oil pump assembly 24 via the oil suction pipe 21. A first (bypass) flow path 18 is defined in the oil pump assembly 24, between the inlet 40 and the outlet 42.

A second (main) flow path 16 originates at the inlet 40 to the oil pump assembly 24, continues via an oil cooler 22 to the lubricated component 14. Oil exits the oil pump assembly 24 from a port 26a, in fluid communication with a connector 26, provided on a housing 45 of the transmission 44. The connector 26 is connected to a hose 28. The hose 28 attaches, via a connector 30, to the oil cooler 22. A second connector 32 is provided on the oil cooler 22, attached to a second hose 34. The hose 34, in turn, attaches to the transmission housing 45 by means of a fourth connector 36. The connector 36 is in fluid communication with a second port 36a provided in the oil pump assembly 24.

The main and bypass flow paths 16, 18 are thus both provided between the inlet 40 to the oil pump assembly 24 and the outlet 42 to the lubricated component 14. The oil cooler 22 is, however, bypassed in the first flow path 18. There is thus provided a parallel recirculating lubrication system 10. A combined oil flow from flow paths 16, 18 is provided from outlet 42 to the component 14 to be lubricated.

A plug 38 is provided in the bypass flow path 18. In the embodiment shown, the plug 38 is located within the oil pump assembly 24. The size of the plug 38 determines the degree to which the bypass flow path 18 is blocked or obstructed, to thus vary or adjust the amount of lubricant flowing through the bypass flow path 18.

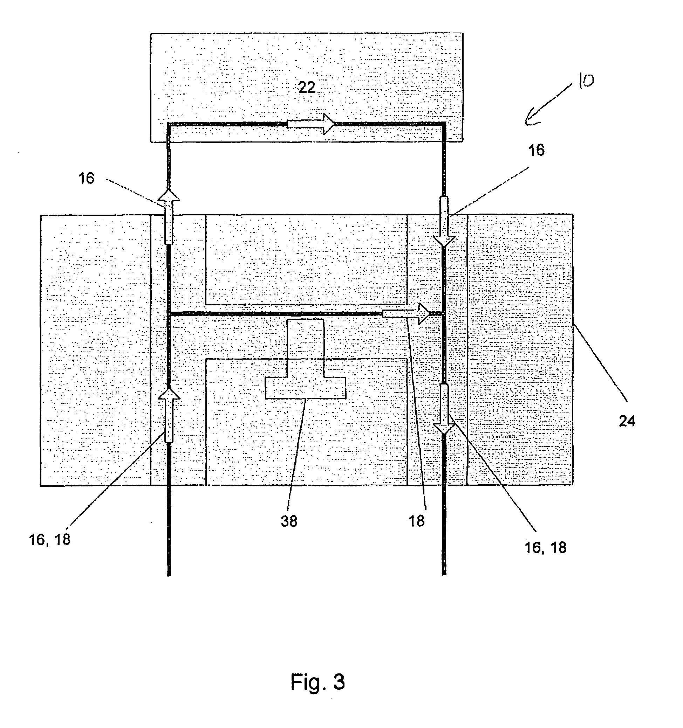

Figure 3 shows a simplified schematic view of the main and bypass flow paths 16, 18. Oil entering the oil pump assembly 24 will be directed along the bypass flow path 18 and along the main flow path 16 if the plug 38 is sized such as to allow oil passage therethrough.

Figures 4 and 5 show exemplary embodiments of the oil cooler system 10 in situ relative to a vehicle transmission system 44. The cooler 22 is preferably mounted in a location where it will receive a direct flow of unheated air, e.g. in front of the engine radiator. This ensures optimum efficiency of the cooler 22 and ensures peak system performance. However, it will be appreciated that the cooler 22 could be mounted elsewhere, and could be water cooled rather than air cooled.

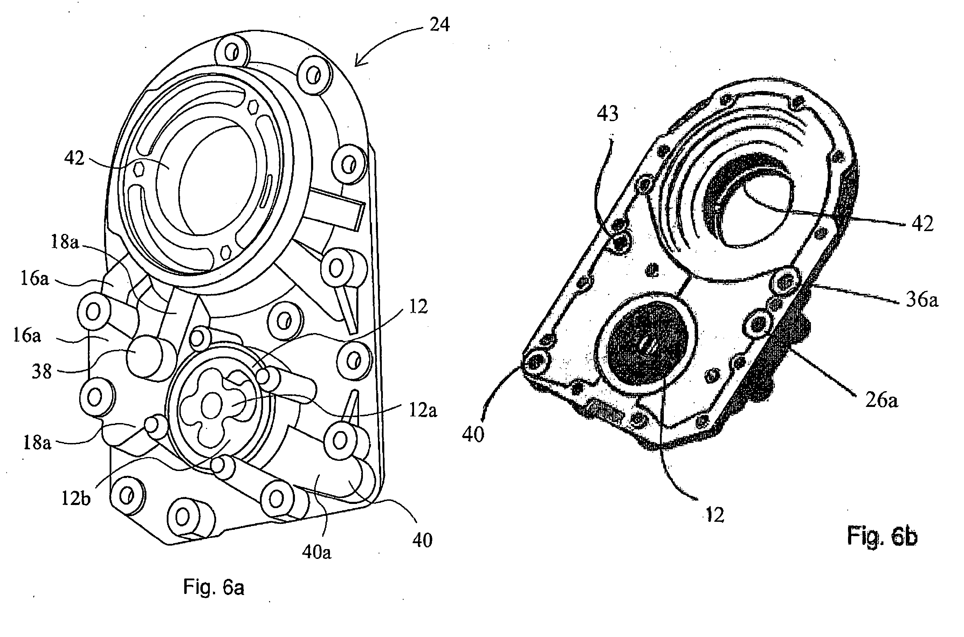

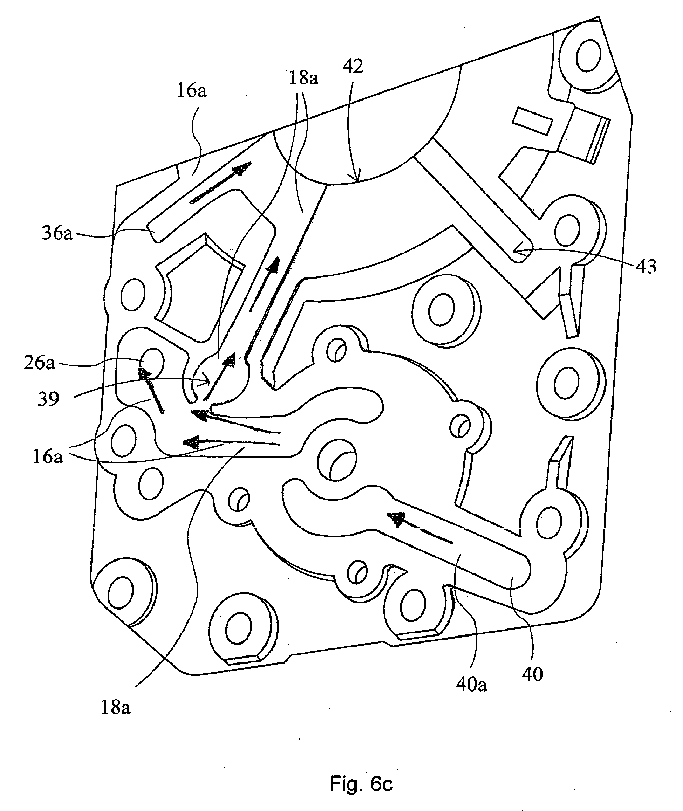

Figures 6a and 6b show front and back views, respectively, of an exemplary oil pump assembly 24. Figure 6c shows a sectional view through the oil pump assembly of Figure 6a. The oil pump assembly 24 comprises an oil pump 12. In the embodiment shown, a positive displacement or gerotor type oil pump is used, comprising an inner 12a and outer 12b rotor. The oil pump assembly 24 further comprises the cooler inlet and outlet connection ports 26a, 36a. Inlet 40 to the oil pump assembly 24, from the suction pipe 21, and outlets 42 and 43 from the oil pump assembly 24 to the lubricated components, are also shown.

In the embodiment shown, the oil pump 12 provides oil to the transmission 44 via oil galleries (e.g. 40a) in the oil pump assembly 24. Oil is provided to and from the oil cooler 22 along the main flow path 16 via an oil transfer channel 16a in the oil pump assembly 24. Oil to be cooled leaves the oil pump assembly via the port 26a, and leaves the transmission housing 45 via the connector 26 connector. Oil returns from the cooler 22 to the oil pump assembly 24 via the connector 36 also provided on the transmission housing 45, and via the port 36a provided in the oil pump assembly. Oil is provided along the bypass flow path 18 via a further oil transfer channel 18a. The oil transfer channels 16a, 18a in the oil pump assembly 24 may be provided in separate components rather than being provided on the oil pump assembly 24. It will, thus, be appreciated that the oil galleries and transfer channels are merely a convenient means of providing connections to and from the oil pump, and that these components could be omitted or take a different form.

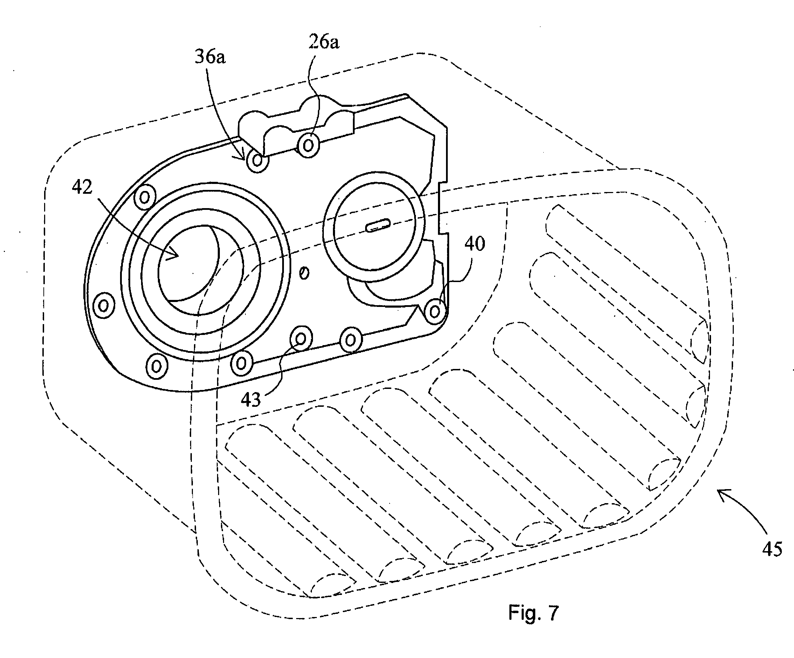

Referring to Figure 7, the oil pump assembly 24 is shown affixed to a housing 45 of the transmission 44. The oil pump assembly 24 can thus be considered as a front plate of the transmission housing 45. An oil outlet 43 is provided, for supplying oil to supportive oil systems, e.g. to spray oil on gears and lubrication of the range set. The oil flow path 43a leading from the outlet 43 is shown in Figure 8.

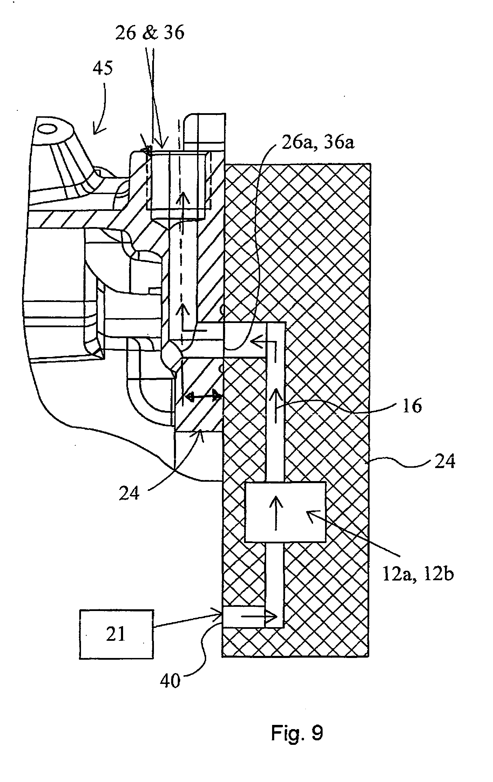

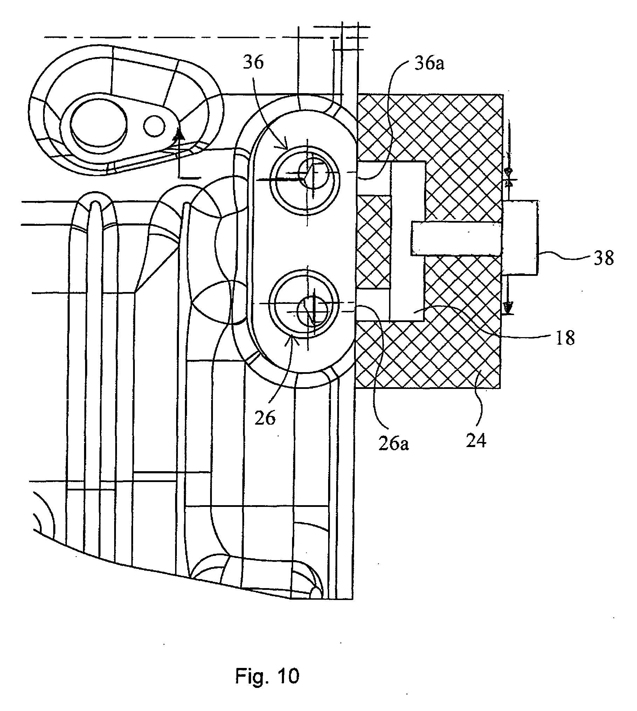

Figure 9 shows a sectional view through the transmission housing 45 combined with a schematic view of the adjacent oil pump assembly 24. The main flow path 16, from the inlet 40 to the oil pump 12, through the oil pump assembly 24, to/from the oil cooler outlet/inlet 26, 36 is shown. The position of the ports 26a, 36a in the oil pump assembly 24 are also shown, as is the fluid connection between the ports 26a, 36a and the oil cooler outlet and inlet 26, 36. The cooler outlet and inlet 26, 36 are not directly visible in Figure 9, but Figure 10, also a composite view, shows the oil outlet and inlet 26, 36 on the upper side of the transmission housing 45 and the fluid connection between the inlet/outlet and the main flow path 18. The plug 38, which determines the degree of obstruction of the flow path 18, is also shown.

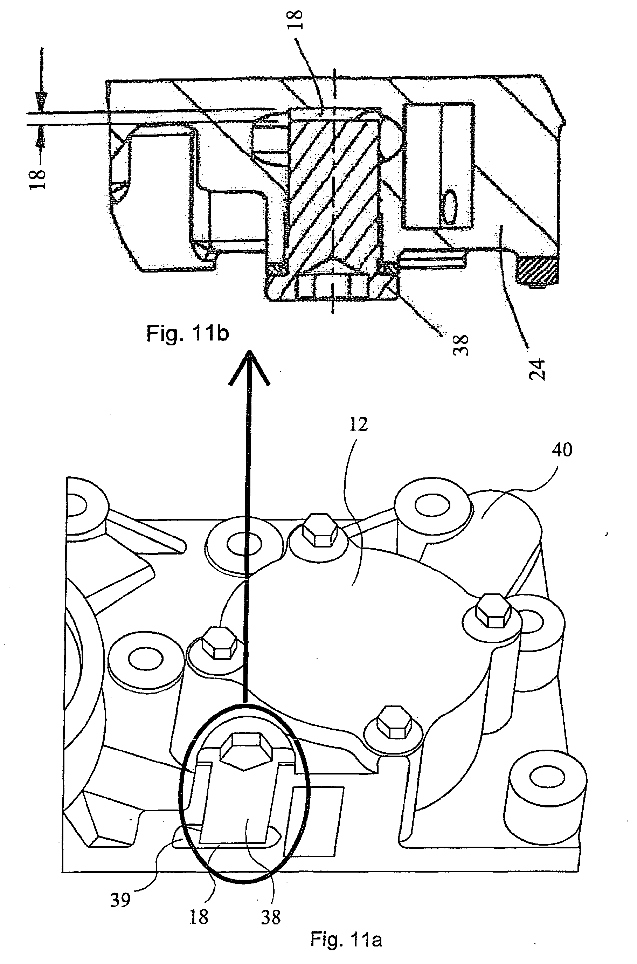

A magnified view of part of the oil pump assembly 24 is shown in Figures 11a and 11b. The plug 38 is shown in situ within the oil pump assembly 24. The edge shown on the left of Figure 11a is cut away, and cut through the plug 38. Figure 11b shows a sectional view through the oil pump assembly 24. In the embodiment shown, the plug 38 occupies almost all of the flow passage space 18, thus restricting oil flow therethrough.

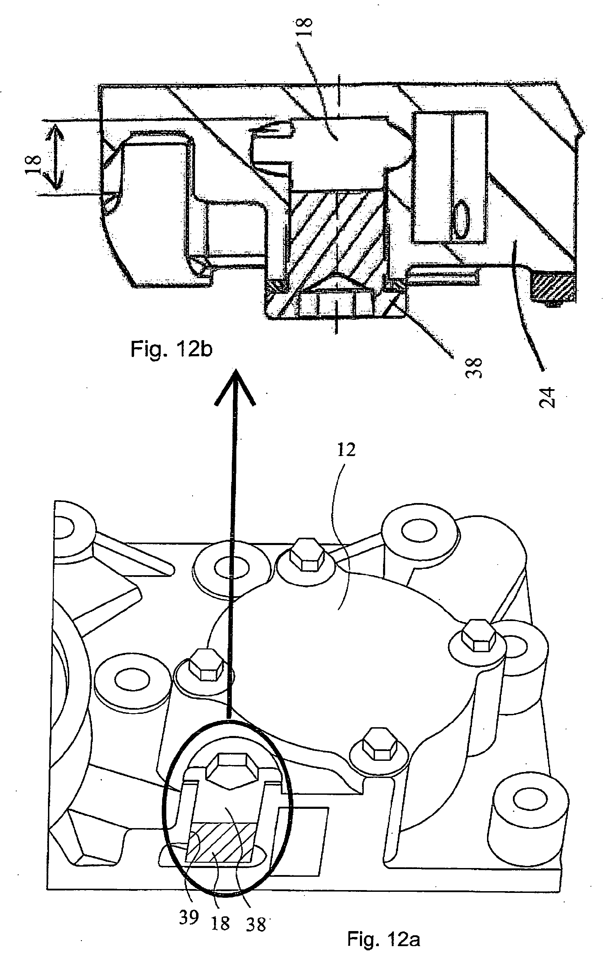

Figures 12a and 12b are views similar to those of Figures 11a and 11b, but show a plug 38 of shorter length, such that the plug 38 occupies less of the flow passage space 18, thus allowing oil flow therethrough.

Figures 11a, 11b, 12a and 12b also show the aperture 39 provided into the oil pump assembly 24, into which the plug 38 is inserted.

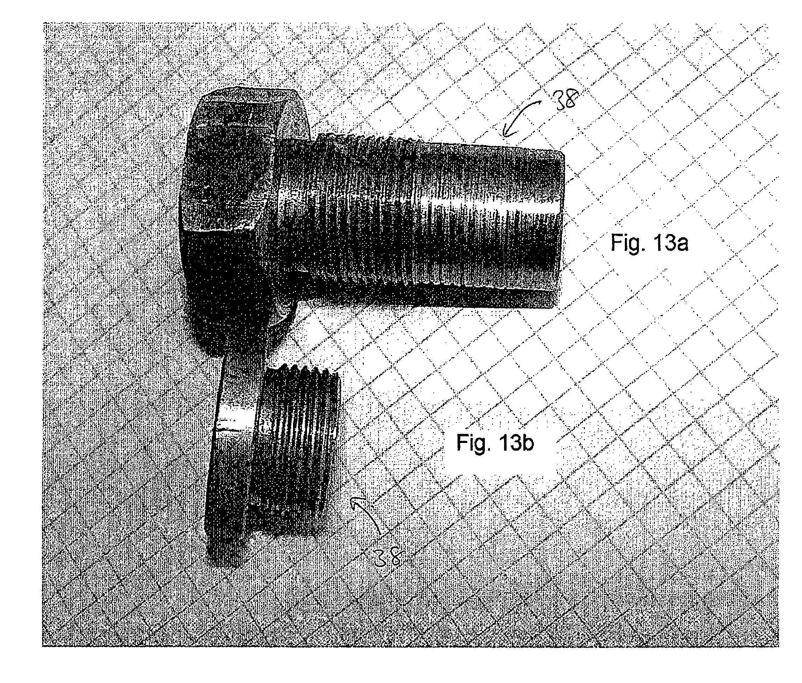

During manufacture / installation of the system 10, a plug 38 can be chosen with a length that will provide a suitable amount of oil flow through the main flow path 18 - for the lubrication application in question e.g. for the transmission system for a particular vehicle. The length of the plug 38 adjusts the amount of oil flowing along the main flow path 18. Figure 13a shows a plug 38 according to one embodiment, where the plug 38 has a long length that would block all or a significant proportion of the flow path 18. Figure 13b shows an alternative embodiment, where the plug 38 has a body of shorter length, which would block the flow path 18 to a much lesser degree than that of Figure 13a.

The body of the plug 38 may be smooth or have a screw thread along all or a part of the length thereof. The aperture 39 in the oil pump assembly 24 into which the plug 38 is placed may be correspondingly threaded to receive the plug 38. The screw thread provides a further degree of adjusting the degree of obstruction of the main flow path 18, the adjustment depending on the vehicle type or expected operating environment of the vehicle to which the cooler system may be applied.

Since oil from the oil pump 12 is provided to both the main and bypass flow paths 16, 18, controlling the oil flow through the main flow path 16 has an effect on the amount of oil flowing through the bypass flow path 18. The invention thus provides a simple means for providing a cooling system to a vehicle or transmission system that has the correct or appropriate balancing between the oil that flows in the respective paths during use after manufacture. Advantageously, a simple mechanical component (the plug 38) is chosen depending on the application / vehicle requirements, rather than needing to tailor the system for use in each application / vehicle, as has previously been the case. It will be appreciated that the plug 38 could be provided in the main flow path 16 instead of in the bypass flow path 18, with a similar result being achieved.

Devices such as those known in the art e.g. operational at / above / below certain oil temperature or pressures may also be incorporated into embodiments of the invention, to provide further control of the amount of cooling provided in situations of extreme heating or cooling of the oil.

## Claims

1. A lubrication cooler system (10) comprising:
a first flow path (18) connecting a lubrication inlet (40) and a lubrication outlet (42);
a second flow path (16) connecting said lubrication inlet and said lubrication outlet and a lubrication cooler (22) therebetween, the second flow path being provided in parallel with said first flow path (18); and
means positioned to block all or a part of said first and/or second flow path to restrict flow of lubrication therethrough when in use by a static and preset amount thereby to provide a preselected and static balance between the amount of lubricant flowing in said first flow path relative to said second flow path, **characterized in that** said blocking means is a plug or threaded bolt fixed in a preset position in the first and/or second flow path during manufacture.

2. The lubrication cooler system of claim 1, wherein said restricted flow is static and preset, and the lubrication system is provided without active flow control in either the first or second flow path.

3. The lubrication cooler system of claim 1, wherein said restricted flow is static and preset to be independent of active control.

4. An automotive vehicle engine or transmission system comprising a lubrication cooler system as defined in any one of the preceding claims, comprising a plate mountable to an engine transmission, said plate being formed to include:
a housing for a lubricant pump (12), the pump being configured to supply lubricant to said transmission;
the lubricant inlet (40) for receiving lubricant from a reservoir;
the lubricant outlet (42) for providing lubricant to said transmission, **characterized in that** the blocking means comprises an opening (39) into said first or second flow path, for receiving the blocking plug (38) or threaded bolt, the blocking plug or threaded bolt, when so received, blocking all or a part of said first or second flow path by said preselected and preset amount.

5. A method of manufacturing a lubrication cooler system (10), the method comprising:
providing a first flow path (18) between a lubrication inlet (40) and a lubrication outlet (42);
providing a second flow path (16) between said lubrication inlet and said lubrication outlet with a lubrication cooler (22) therebetween, the second flow path being provided in parallel with said first flow path; and
selectively blocking all or a part of said first and/or second flow path by a static and preset amount thereby to provide a preselected and fixed balance between the amount of lubricant flowing in said first flow path relative to said second flow path when the lubrication cooler system is in use, **characterized in that** the step of selectively blocking comprises inserting a plug or a threaded bolt into the path by an amount that corresponds to a predetermined application for the vehicle engine or transmission system, thereby to achieve the preselected and static balance.

6. A method according to claim 5, wherein the step of selectively blocking comprises selecting between a plurality of blocking means (38), each configured to block the first/and or second flow paths by a respectively different static and preset amount such as to define different respective applications for the engine or transmission system, and inserting the selected blocking means (38) into said first or second flow path.

## Patentansprüche

1. Schmiermittelkühlersystem (10), umfassend:
einen ersten Fließweg (18), der einen Schmiermitteleinlass (40) und einen Schmiermittelauslass (42) verbindet;
einen zweiten Fließweg (16), der den Schmiermitteleinlass und den Schmiermittelauslass und einen dazwischen befindlichen Schmiermittelkühler (22) verbindet, wobei der zweite Fließweg parallel zum ersten Fließweg (18) vorgesehen ist; und
Mittel, die so angeordnet sind, dass sie den ersten und/oder zweiten Fließweg ganz oder teilweise absperren, um den Durchfluss von Schmiermittel durch diese(n) hindurch während der Verwendung um ein statisches und vorgegebenes Maß einzuschränken und dadurch eine vorausgewählte und statische Balance zwischen der Menge an im ersten Fließweg fließenden Schmiermittel bezogen auf den zweiten Fließweg bereitzustellen, **dadurch gekennzeichnet, dass** das Absperrmittel ein Stopfen oder Gewindebolzen ist, der während der Herstellung in einer vorgegebenen Position im ersten und/oder zweiten Fließweg angebracht wird.

2. Schmiermittelkühlersystem nach Anspruch 1, wobei der eingeschränkte Durchfluss statisch und vorgegeben ist und das Schmiersystem entweder im ersten oder im zweiten Fließweg nicht mit einer aktiven Durchflussregelung versehen ist.

3. Schmiermittelkühlersystem nach Anspruch 1, wobei der eingeschränkte Durchfluss statisch und vorgegeben ist, um von einer aktiven Regelung unabhängig zu sein.

4. Kraftfahrzeugmotor- oder -getriebesystem, das ein Schmiermittelkühlersystem entsprechend der Definition in einem der vorangehenden Ansprüche umfasst, das eine an einem Motorgetriebe montierbare Platte umfasst, wobei die Platte so ausgebildet ist, dass sie umfasst:
ein Gehäuse für eine Schmiermittelpumpe (12), wobei die Pumpe so ausgestaltet ist, dass sie dem Getriebe Schmiermittel zuführt;
den Schmiermitteleinlass (40) zum Erhalt von Schmiermittel aus einem Vorratsbehälter;
den Schmiermittelauslass (42) zur Bereitstellung von Schmiermittel an das Getriebe, **dadurch gekennzeichnet, dass** das Absperrmittel eine Öffnung (39) in den ersten oder zweiten Fließweg hinein zur Aufnahme des Absperrstopfens (38) oder Gewindebolzens umfasst, wobei der Absperrstopfen oder Gewindebolzen während dieser Aufnahme den ersten oder zweiten Fließweg ganz oder teilweise um das vorausgewählte und vorgegebene Maß absperrt.

5. Verfahren zur Herstellung eines Schmiermittelkühlersystems (10), wobei das Verfahren umfasst:
Bereitstellen eines ersten Fließwegs (18) zwischen einem Schmiermitteleinlass (40) und einem Schmiermittelauslass (42);
Bereitstellen eines zweiten Fließwegs (16) zwischen dem Schmiermitteleinlass und dem Schmiermittelauslass mit einem dazwischen befindlichen Schmiermittelkühler (22), wobei der zweite Fließweg parallel zum ersten Fließweg vorgesehen ist; und
wahlweises, vollständiges oder teilweises Absperren des ersten und/oder zweiten Fließwegs um ein statisches und vorgegebenes Maß, um dadurch während der Verwendung des Schmiermittelkühlersystems eine vorausgewählte und feststehende Balance zwischen der Menge an im ersten Fließweg fließenden Schmiermittel bezogen auf den zweiten Fließweg bereitzustellen, **dadurch gekennzeichnet, dass** der Schritt des wahlweisen Absperrens die Einführung eines Stopfens oder Gewindebolzens in den Weg umfasst, und zwar um ein Maß,
das einer vorgegebenen Anwendung für das Fahrzeugmotor- oder -getriebesystem entspricht, um dadurch die vorausgewählte und statische Balance zu erreichen.

6. Verfahren nach Anspruch 5, wobei der Schritt des wahlweisen Absperrens umfasst: das Auswählen zwischen einer Mehrzahl von Absperrmitteln (38), die jeweils so ausgestaltet sind, dass sie den ersten und/oder zweiten Fließweg um ein jeweils anderes statisches und vorgegebenes Maß absperren, um unterschiedliche jeweilige Anwendungen für das Motor- oder Getriebesystem zu definieren, und das Einführen des ausgewählten Absperrmittels (38) in den ersten oder zweiten Fließweg.

## Revendications

1. Système refroidisseur de lubrification (10) comprenant :
un premier chemin de flux (18) reliant une entrée de lubrification (40) et une sortie de lubrification (42) ;
un second chemin de flux (16) reliant ladite entrée de lubrification et ladite sortie de lubrification et un refroidisseur de lubrification (22) entre ces dernières, le second chemin de flux étant disposé parallèlement audit premier chemin de flux (18) ; et
un moyen positionné pour bloquer tout ou partie dudit premier et/ou second chemin de flux pour limiter le flux de lubrification à travers ces derniers, quand il est en fonctionnement, à une quantité statique et définie à l'avance pour réaliser ainsi un équilibre présélectionné et statique entre la quantité de lubrifiant s'écoulant dans ledit premier chemin de flux par rapport audit second chemin de flux, **caractérisé en ce que** ledit moyen de blocage est un bouchon ou un boulon fileté fixé dans une position définie à l'avance dans le premier et/ou second chemin de flux pendant la fabrication.

2. Système refroidisseur de lubrification selon la revendication 1, dans lequel ledit flux limité est statique et défini à l'avance, et le système de lubrification est prévu sans commande de flux active dans le premier ou le second chemin de flux.

3. Système refroidisseur de lubrification selon la revendication 1, dans lequel ledit flux limité est statique et défini à l'avance pour être indépendant d'une commande active.

4. Moteur de véhicule automobile ou système de transmission comprenant un système refroidisseur de lubrification selon l'une quelconque des revendications précédentes, comprenant une plaque pouvant être montée sur une transmission de moteur, ladite plaque étant formée pour inclure :
un carter pour une pompe de lubrifiant (12), la pompe étant configurée pour fournir du lubrifiant à ladite transmission ;
l'entrée de lubrifiant (40) pour recevoir du lubrifiant en provenance d'un réservoir ;
la sortie de lubrifiant (42) pour fournir du lubrifiant à ladite transmission, **caractérisé en ce que** le moyen de blocage comprend une ouverture (39) dans ledit premier ou second chemin de flux, pour recevoir le bouchon de blocage (38) ou le boulon fileté, le bouchon de blocage ou le boulon fileté, quand il est ainsi reçu, bloquant tout ou partie dudit premier ou second chemin de flux à ladite quantité présélectionnée et définie à l'avance.

5. Procédé de fabrication d'un système refroidisseur de lubrification (10), le procédé comprenant :
la fourniture d'un premier chemin de flux (18) entre une entrée de lubrification (40) et une sortie de lubrification (42) ;
la fourniture d'un second chemin de flux (16) entre ladite entrée de lubrification et ladite sortie de lubrification avec un refroidisseur de lubrification (22) entre ces dernières, le second chemin de flux étant disposé parallèlement audit premier chemin de flux ; et
le blocage sélectif de tout ou partie dudit premier et/ou second chemin de flux à une quantité statique et définie à l'avance pour réaliser ainsi un équilibre présélectionné et fixé entre la quantité de lubrifiant s'écoulant dans ledit premier chemin de flux par rapport audit second chemin de flux lorsque le système refroidisseur de lubrification est en fonctionnement, **caractérisé en ce que** l'étape de blocage sélectif comprend l'insertion d'un bouchon ou d'un boulon fileté dans le chemin à une quantité qui correspond à une application prédéterminée pour le moteur de véhicule ou le système de transmission, pour parvenir ainsi à l'équilibre présélectionné et statique.

6. Procédé selon la revendication 5, dans lequel l'étape de blocage sélectif comprend la sélection entre une pluralité de moyens de blocage (38), chacun configuré pour bloquer le premier et/ou second chemins de flux à une quantité statique et définie à l'avance respectivement différente de façon à définir des applications respectives différentes pour le moteur ou le système de transmission, et l'insertion du moyen de blocage sélectionné (38) dans ledit premier ou second chemin de flux.
